# EUROPÄISCHE PATENTANMELDUNG

(11) **EP 0 845 750 A2**
(43) Veröffentlichungstag der Anmeldung: **03.06.1998**
(21) Anmeldenummer: 97120033.2
(22) Anmeldetag: 14.11.1997
(51) Int. Cl.: G06K 7/00

(54) **Doppelstöckiger Stecker für zwei Chipkarten**

(30) Priorität: 29.11.1996 DE 19649598
(71) Anmelder: SIEMENS AKTIENGESELLSCHAFT, 80333 München (DE)
(72) Erfinder: Schmidt, Helge, 67346 Speyer (DE); Ackermann, Gerhard, 68804 Altlussheim (DE)

(57) **Zusammenfassung**

Der Stecker mit einem flachen Isolationskörper (1) weist auf seiner ersten Stirnseite eine Stecköffnung (2) für bis zu zwei versetzt übereinander stapelbare Datenträgeranordnungen bzw. Chipkarten (3, 4) mit reihenartig nebeneinander liegenden Kontaktflächen auf. Außerdem weist er im Bereich seiner der Stecköffnung (2) gegenüberliegenden Anschlußseite (5) zwei räumlich um eine Kartenhöhe nach oben und entsprechend dem Kartenversatz auch in Steckrichtung versetzte Reihen von nebeneinander liegenden Kontaktfedern auf, deren steckseitige, federnde Enden die Kontaktflächen eingesteckter Chipkarten (3, 4) jeweils von oben her kontaktieren.

## Beschreibung

Die Erfindung betrifft einen doppelstöckigen Stecker für zwei Chipkarten.

Mit zunehmender Speicherkapazität ihrer IC's eröffnen sich für Speicherchipkarten ganz neue Anwendungsfelder. Beim Einsatz in elektronischen Systemen, insbesondere im Bereich der mobilen Telekommunikation (Handy) wird dabei die Kontaktierung von zwei dieser sogenannten Multimediakarten auf minimalem Einbauraum gefordert. Multimediaspeicherkarten sollen in Zukunft Funktionen als Datenträger für große Datenmengen, ähnlich wie bisher Diskette oder CD-ROM übernehmen. Im Hinblick auf Handys geht es deshalb beispielsweise nicht um die Speicherung von ca. 200 privaten Telefonnummern, wie sie schon bisher mittels der bekannten SIM-Karten möglich ist, sondern um austauschbare Karten, auf denen beispielsweise umfangreiche Softwareprogramme oder komplette Telefonbücher gespeichert sind.

Aufgabe der vorliegenden Erfindung ist die Schaffung einer räumlich möglichst kompakten Kontaktierungsmöglichkeit für mindestens zwei Speicherkarten mit jeweils in einer Reihe nebeneinander liegenden Oberflächenkontakten.

Diese Aufgabe wird gelöst durch einen doppelstöckigen Stecker mit einem flachen, auf einem Systemträger montierbaren Isolationskörper,
- der an seiner ersten Stirnseite mit einer Stecköffnung für bis zu zwei mit ihren Hauptflächen versetzt übereinander stapelbare kartenförmige Datenträgeranordnungen, die jeweils mindestens einen integrierten Halbleiterschaltkreis und mehrere damit verbundene, auf einer ihrer Hautflächen reihenartig nebeneinander liegende Kontaktflächen aufweisen, ausgebildet ist,
- und der im Bereich seiner der Stecköffnung gegenüberliegenden Anschlußseite zwei räumlich versetzte Reihen von nebeneinander liegenden Kontaktfedern aufweist, deren anschlußseitige Enden jeweils als Steckeranschlüße ausgebildet sind,
- wobei die steckseitigen, federnden Enden der Kontaktfedern der ersten, unteren Reihe die Kontaktflächen einer eingesteckten ersten, unteren Karte von oben her kontaktieren,
- und wobei die entsprechenden Federenden der zweiten, oberen Reihe, die gegenüber der ersten Reihe entsprechend dem Dickenmaß der Karten um eine Kartenhöhe nach oben und entsprechend dem Kartenversatz in Steckrichtung um diesen Versatz in Richtung Stecköffnung versetzt ist, die Kontaktflächen einer eingesteckten zweiten, oberen Karte von oben her kontaktieren.

Weiterbildungen der Erfindung sind Gegenstand der Unteransprüche.

Die Erfindung wird nachfolgend anhand von Ausführungsbeispielen im Zusammenhang mit den Figuren der Zeichnung erläutert. Es zeigt
- Figur 1: eine Aufsicht von oben auf den erfindungsgemäßen Stecker,
- Figur 2 bzw. 3: den Stecker gemäß Figur 1 in einer Seitenansicht von der Steck- bzw. von der Anschlußseite her,
- Figur 4: den Stecker gemäß den vorangehenden Figuren in einer perspektivischen Aufsicht schräg auf die Anschlußseite,
- Figur 5: den erfindungsgemäßen, im Gegensatz zu den vorangegangenen Figuren jedoch mit Karten bestückten Stecker in einer perspektivischen Aufsicht schräg von der Steckseite her.

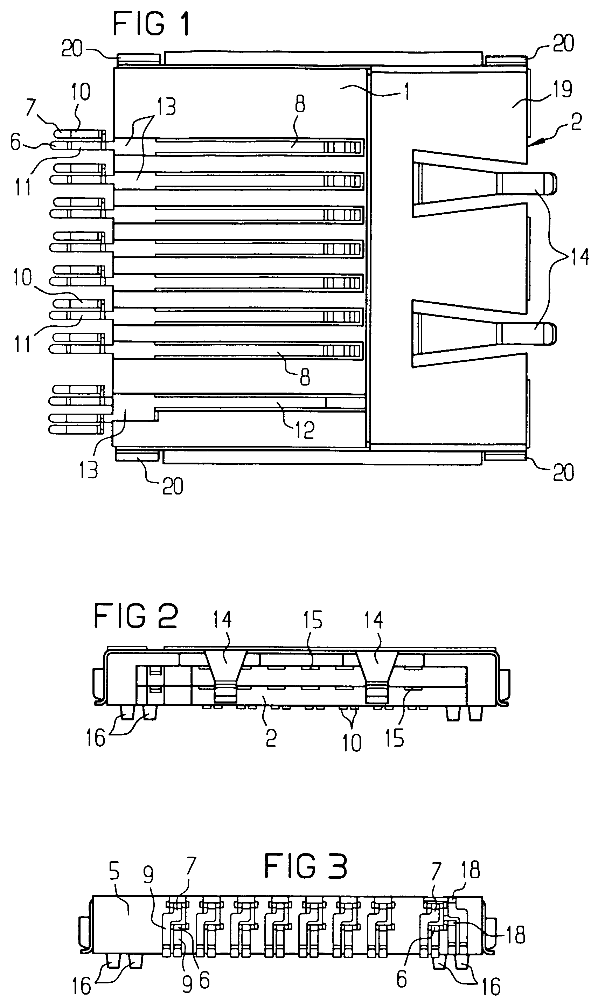

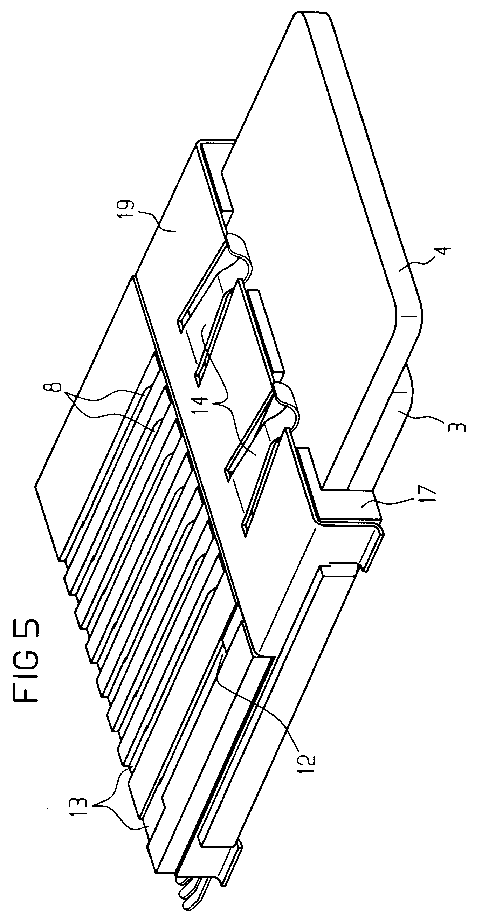

Der Stecker wird beispielsweise mittels der in den Figuren 2 und 3 erkennbaren Füße 16 auf einem nicht dargestellten Systemträger befestigt. Dabei kann es sich insbesondere um eine Leiterplatte handeln oder auch um die Gehäusewand eines elektronischen Systems. Aus Figur 5 geht hervor, daß der Querschnitt des Isolationskörpers 1 im wesentlichen U-förmig ausgebildet ist, wobei die Basis breit und die U-Schenkel 17 nur wenig länger als das Dickenmaß zweier aufeinander gestapelter Karten 3 und 4 ausgebildet sind. Der Isolationskörper 1 ist demnach nach unten im wesentlichen offen, so daß die immer zuerst in den unteren Kartenplatz gesteckte erste Karte 3 durch die Andruckmittel 14, die nachfolgend noch weiter erläutert werden, unmittelbar gegen die Oberfläche des Systemträgers, auf dem der Stecker montiert ist, gedrückt wird.

Der Stecker weist zwei räumlich versetzte reihenartige Kontaktfedersätze auf. Die beiden jeweils waagerecht verlaufenden Kontaktfederreihen sind vertikal um eine Kartenhöhe versetzt, vgl. Figur 2, wobei dort jedoch die mit ihren Stirnflächen nicht in den Kartenraum bzw. in die Stecköffnung 2 hineinstehenden Federenden der Kontaktfedern nicht selbst, sondern jeweils nur die an den Federenden angeordneten, nach unten in den Kartenraum hineinstehenden Kontaktnoppen 15 erkennbar sind. Der Versatz der Federenden der zweiten, oberen Reihe in Richtung Stecköffnung 2 ist durch den in Figur 5 erkennbaren Überstand der oberen Karte 4 gegenüber der unteren Karte 3 gegeben. Die Karten 3 und 4 werden jeweils in die Stecköffnung 2 eingeschoben, bis sie an Anschlagflächen im Inneren des Isolationskörpers 1, die den gewünschten Versatz in Steckrichtung aufweisen, anstoßen. Dieser Versatz kann beispielsweise bei Steckerabmessungen von 35 x 35 mm ca. 5 mm betragen.

Das in allen Figuren dargestellte Ausführungsbeispiel geht von acht in einer Reihe nebeneinander liegenden Kontaktfedern, also von einer Speicherkarte aus, auf deren Hauptfläche acht Kontaktflächen in einer Reihe nebeneinander liegen. Das erfinderische Konzept kann jedoch ohne weiteres mit einer davon abweichenden Anzahl von Reihenplätzen verwirklicht werden, insbesondere kann eine Reihe auf 10 Kontakt- bzw. Schaltplätze erweitert werden.

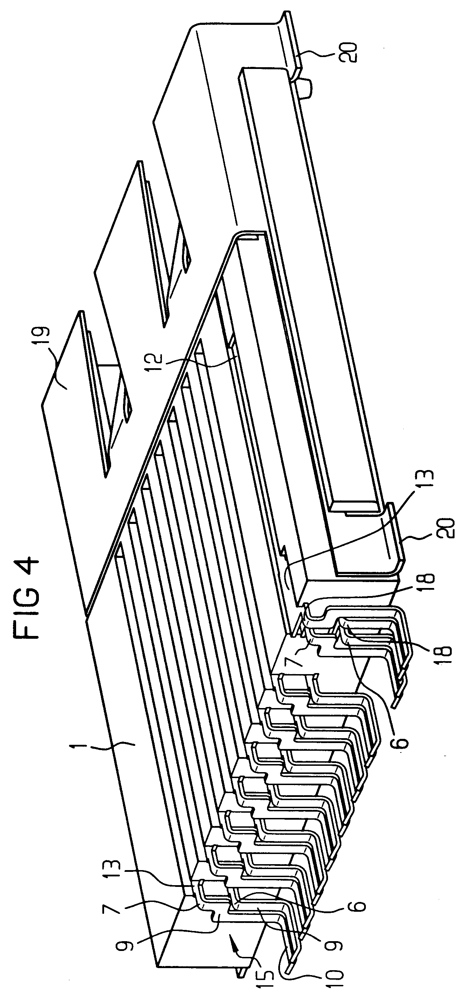

Insbesondere in den Figuren 3 und 4 ist erkennbar, daß die in Steckrichtung aus der Anschlußseite 5, also der der Stecköffnung 2 gegenüberliegenden zweiten Stirnseite des Steckers, herausragenden Steckeranschlüsse 6 und 7 zunächst nach unten zu einem parallel zur Anschlußseite verlaufenden Mittelabschnitt 9 und anschließend zu einem parallel zum Systemträger verlaufenden Lötabschnitt 10 abgebogen sind, wobei der Mittelabschnitt 9 der zweiten, oberen Steckeranschlußreihe jeweils S-förmig gekröpft ausgeführt ist, so daß die zum gleichen Reihenplatz gehörigen oberen und unteren Kontaktfedern mittels ihrer durch eben diese Kröpfung eng nebeneinander liegenden Lötabschnitte 10 und 11, vgl. Figur 1, paarweise auf einem Lötpad des Systemträgers anschließbar sind. Auch bei nicht kompatiblen Karten, die nicht durch ein gemeinsames Lötpad parallel geschaltet werden sollen, ist die beschriebene Art der Entflechtung, die grundsätzlich zu plan nebeneinander liegenden Kontaktabschnitten 10 und 11 führt, vorteilhaft.

Es ist vorteilhaft, im Stecker noch eine optionale Schalterfunktion vorzusehen, damit die Elektronik eine Manipulation der Karten, beispielsweise nachträgliches Stecken der zweiten Karte oder Ziehen von Karten erkennen kann. Dazu ist beim erfindungsgemäßen Stecker für mindestens eine der Karten 3 und 4 ein Schalter vorgesehen, der jeweils durch eine der oben beschriebenen, normalen Kontaktfedern und durch eine zusätzliche Schaltfeder gebildet ist, deren Federende 12 parallel zum knapp darunter verlaufenden Federende der Kontaktfeder angeordnet ist. Dieses Kontaktfederende wird durch eine eingesteckte Karte 3 oder 4 soweit zur Schaltfeder hoch gedrückt, daß der gewünschte Schalterkontakt hergestellt ist. Der Verlauf der Steckeranschlüsse dieser zwei unabhängigen Schalter (je einer für die obere und die untere Karte) ist aus den Figuren 1 bzw. 4 erkennbar. Für jeden Schalter ist demnach ein normaler Steckeranschluß 6, 7 und ein Schaltfederanschluß 18 vorgesehen.

Zur Einsparung zusätzlicher Befestigungselemente ist es vorteilhaft, wenn die Kontakt- und die Schaltfedern jeweils einen zwischen dem Steckeranschluß 6 und 7 und dem Federende 8 angeordneten Befestigungsabschnitt 13 aufweisen, der gegenüber dem Federende 8 verbreitert ist und mittels dem die Kontakt- bzw. Schaltfedern durch leichten Überschnitt (einige ¹/₁₀₀ mm) im Isolationskörper 1 eingepresst sind.

Wie erwähnt wird durch die Stecköffnung 2 immer zuerst der untere Kartenplatz bestückt. Über den Isolationskörper 1 kann ein U-förmiges Stanzteil als Lötbügel geschoben werden. Eine im Lötbügel 19 integrierte Feder 14 drückt die untere Karte gegen die Oberfläche des Systemträgers, bzw. die obere Karte auf die Oberseite der unteren Karte. Durch diese vertikale Positionierung und eindeutige Fixierung wird die Kontaktierung der Karten, auch der einzelnen Karte, an den zugehörigen Kontaktfederreihen gesichert, und es wird ein sonst mögliches Herausrutschen verhindert. Die Andruckfeder 14 kann in verschiedenen Ausführungen realisiert werden. Beispielsweise kann ein einfacher Federarm, ein Federarm mit Rechteckform oder eine vom Lötbügel getrennte, als zusätzliches Teil im Gehäuse montierte Andruckfeder vorgesehen werden. Der Anschluß des Steckers auf einer Leiterplatte erfolgt vorzugsweise in SMD-Technik, z. B. durch Anlöten der Taschen 20 am Lötbügel 19. Ein Einbetten des Steckers auf dem Systemträger mittels Ultraschalltechnik oder durch Warmprägen ist ebenfalls möglich.

## Patentansprüche

1. Doppelstöckiger Stecker mit einem flachen, auf einem Systemträger montierbaren Isolationskörper (1),
- der an seiner ersten Stirnseite mit einer Stecköffnung (2) für bis zu zwei mit ihren Hauptflächen versetzt übereinander stapelbare kartenförmige Datenträgeranordnungen (3, 4), die jeweils mindestens einen integrierten Halbleiterschaltkreis und mehrere damit verbundene, auf einer ihrer Hauptflächen reihenartig nebeneinander liegende Kontaktflächen aufweisen, ausgebildet ist,
- und der im Bereich seiner der Stecköffnung (2) gegenüberliegenden Anschlußseite (5) zwei räumlich versetzte Reihen von nebeneinander liegenden Kontaktfedern aufweist, deren anschlußseitige Enden jeweils als Steckeranschlüsse (6, 7) ausgebildet sind,
- wobei die steckseitigen, federnden Enden der Kontaktfedern der ersten, unteren Reihe die Kontaktflächen einer eingesteckten ersten, unteren Karte (3) von oben her kontaktieren,
- und wobei die entsprechenden Federenden (8) der zweiten, oberen Reihe, die gegenüber der ersten Reihe entsprechend dem Dickenmaß der Karten (3, 4) um eine Kartenhöhe nach oben und entsprechend dem Kartenversatz in Steckrichtung um diesen Versatz in Richtung Stecköffnung (2) versetzt ist, die Kontaktflächen einer eingesteckten zweiten, oberen Karte (4) von oben her kontaktieren.

2. Doppelstöckiger Stecker nach Anspruch 1,
**dadurch gekennzeichnet**,
daß die in Steckrichtung aus der Anschlußseite (5) herausragenden Steckeranschlüsse (6, 7) zunächst nach unten zu einem parallel zur Anschlußseite (5) verlaufenden Mittelabschnitt (9) und anschließend zu einem parallel zum Systemträger verlaufenden Kontaktabschnitt (10) abgebogen sind, wobei der Mittelabschnitt (9) der zweiten, oberen Steckeranschlußreihe jeweils S-förmig gekröpft ausgeführt ist, so daß die zum gleichen Reihenplatz gehörenden oberen und unteren Kontaktfedern mittels plan nebeneinander liegenden Kontaktabschnitte (10, 11) paarweise auf dem Systemträger anschließbar sind.

3. Doppelstöckiger Stecker nach Anspruch 1 oder 2,
**dadurch gekennzeichnet,**
daß für mindestens eine der Karten (3, 4) ein Schalter vorgesehen ist, der jeweils durch eine Kontaktfeder und durch eine zusätzliche Schaltfeder gebildet ist, deren Federende (12) parallel zum knapp darunter verlaufenden Federende der Kontaktfeder angeordnet ist, das durch eine eingesteckte Karte (3, 4) soweit zur Schaltfeder hoch gedrückt ist, daß der Schalterkontakt hergestellt ist.

4. Doppelstöckiger Stecker nach einem der Ansprüche 1 - 3,
**dadurch gekennzeichnet,**
daß die Kontakt- und die Schaltfedern jeweils einen zwischen dem Steckeranschluß (6, 7) und dem Federende angeordneten Befestigungsabschnitt (13) aufweisen, der gegenüber dem Federende verbreitert ist und mittels dem sie durch leichten Überschnitt im Isolationskörper (1) eingepaßt sind.

5. Doppelstöckiger Stecker nach einem der Ansprüche 1 - 4,
**dadurch gekennzeichnet,**
daß Mittel (14) zur vertikalen Positionierung der Karten (3, 4) vorgesehen sind.
